# EUROPEAN PATENT SPECIFICATION

(11) **EP 3 949 331 B1**
(45) Date of publication and mention of the grant of the patent: **19.06.2024**
(21) Application number: 20722798.4
(22) Date of filing: 03.04.2020
(51) Int. Cl.: H04L 9/40, G06F 21/57, G06F 21/70

(54) **VERIFYING THE TRUST-WORTHINESS OF A PHYSICAL HOST UNDERLYING A VIRTUAL NETWORK ELEMENT**
VERIFIZIERUNG DER VERTRAUENSWÜRDIGKEIT EINES PHYSIKALISCHEN HOSTS, DER EINEM VIRTUELLEN NETZWERKELEMENT UNTERLIEGT
VÉRIFICATION DE LA CONFIANCE D'UN HÔTE PHYSIQUE SOUS-JACENT D'UN ÉLÉMENT DE RÉSEAU VIRTUEL

(30) Priority: 03.04.2019 US 201962828992 P
(43) Date of publication of application: 09.02.2022
(73) Proprietor: Cisco Technology, Inc., San Jose, California 95134-1706 (US); Fraunhofer Institute for Secure Information Technology, 64295 Darmstadt (DE)
(72) Inventor: VOIT, Eric, Bethesda, Maryland 20817 (US); BIRKHOLTZ, Henk, 28219 Bremen (DE); FUCHS, Andreas, 64283 Darmstadt (DE)
(74) Representative: Warren, Caroline Elisabeth
(86) International application number: PCT/US2020/026722
(87) International publication number: WO 2020/206355

(56) References cited:
- US-A1- 2006 149 851
- US-A1- 2017 161 505
- US-A1- 2018 181 756

## Description

### CROSS-REFERENCE TO RELATED APPLICATIONS

This application claims priority to U.S. Provisional Patent Application No. 62/828,992 filed on April 3, 2019, entitled "VERIFYING THE INTEGRITY OF THE PHYSICAL HOST WHICH UNDERLIES A PEER VIRTUAL ROUTER,".

### TECHNICAL FIELD

The present disclosure generally relates to the field of computer networking, and more particularly to assessing reliability and trustworthiness of physical devices operating within a network that host one or more virtual devices such as virtual routers.

### BACKGROUND

Assessing trustworthiness of virtual devices such as routers operating within a network are not straightforward as details of an underlying physical device on which they operate are not easily ascertainable and available to the virtual devices. Therefore, determining trustworthiness of a virtual network device, by a peer device operating within a network prior to establishing a communication or data exchange therewith, is incomplete and inaccurate as trustworthiness of the underlying physical device is unknown.

US 2017/161505 discloses a tiered credentialing approach to provide assurances that the virtual images for virtual machines are in a pristine state and running in a trusted execution environment. The environment can be divided into multiple subsystems, each having its own cryptographic boundary, secure storage, and trusted computing capabilities. A trusted, limited subsystem can handle the administrative tasks for virtual machines running on the main system of a host computing device. The limited system can receive a certificate from a certificate authority, and can act as a certificate authority to provide credentials to the main system. Upon an attestation request, the subsystems can provide attestation information using the respective credentials as well as the certificate chain. The attestation request and response comprise a random cryptographic nonce. An entity having the appropriate credentials can determine the state of the system from the response and verify the state is as expected.

US 2018/181756 discloses a service provider providing virtual computing services using a fleet of one or more host computer systems. Each of the host computer systems may be equipped with a trusted platform module ("TPM"). The service provider, the host computer systems, and the virtual computing environments generate attestations that prove the integrity of the system. The attestations are signed with a one-time-use cryptographic key that is verifiable against the public keys of the service provider, a host computer system, and a virtual computing environment. The public key of the host computer system is integrated into a hash tree that links the public key of the host computer system to the public key of the service provider. The public key of the virtual computing environment is signed using a one-time-use graphic key issued to the host computer system that hosts the virtual computing environment.

US 2006/149851 discloses physical router devices which report router status information to a router priority calculation device via a local network. According to the router status information reported, the router priority calculation device calculates priority of each physical router device and reports the priority to the physical router devices via the local network. According to the priority reported, the physical router devices decide one master router and a backup router other than this from a plurality of physical router devices. Thus, by utilizing the priority obtained from the router status information on the physical router devices, it is possible to automatically and flexibly constitute a virtual router device.

### Brief Description of the Figures

To provide a more complete understanding of the present disclosure and features and advantages thereof, reference is made to the following description, taken in conjunction with the accompanying drawings, in which:
FIG. 1 is a block diagram of an example of networking environment 100 in accordance with some implementations;
FIG. 2 is a block diagram of another example networking environment 200 in accordance with some implementations;
FIG. 3 is a block diagram of another example networking environment 300 in accordance with some implementations;
FIG. 4 is a block diagram of an example controller-orchestrated attestation-based routing 400 in accordance with some implementations;
FIG. 5 is a block diagram of an example system for attesting physical hosts on which a virtual network device operates in accordance with some implementations;
FIG. 6 describes an example method of attesting a physical host underlying a virtual network component in accordance with some implementations;
FIG. 7 describes an example method of obtaining and storing verification information of a physical host underlying a virtual network component in accordance with some implementations; and
FIGs. 8A and 8B illustrate systems in accordance with some implementations.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used. Thus, the following description and drawings are illustrative and are not to be construed as limiting. Numerous specific details are described to provide a thorough understanding of the disclosure. However, in certain instances, well-known or conventional details are not described in order to avoid obscuring the description. References to one or an embodiment in the present disclosure can be references to the same embodiment or any embodiment; and, such references mean at least one of the embodiments.

Reference to "one embodiment" or "an embodiment" means that a particular feature, structure, or characteristic described in connection with the embodiment is included in at least one embodiment of the disclosure. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others.

The terms used in this specification generally have their ordinary meanings in the art, within the context of the disclosure, and in the specific context where each term is used. Alternative language and synonyms may be used for any one or more of the terms discussed herein, and no special significance should be placed upon whether or not a term is elaborated or discussed herein. In some cases, synonyms for certain terms are provided. A recital of one or more synonyms does not exclude the use of other synonyms. The use of examples anywhere in this specification including examples of any terms discussed herein is illustrative only, and is not intended to further limit the scope and meaning of the disclosure or of any example term. Likewise, the disclosure is not limited to various embodiments given in this specification.

Without intent to limit the scope of the disclosure, examples of instruments, apparatus, methods and their related results according to the embodiments of the present disclosure are given below. Note that titles or subtitles may be used in the examples for convenience of a reader, which in no way should limit the scope of the disclosure. Unless otherwise defined, technical and scientific terms used herein have the meaning as commonly understood by one of ordinary skill in the art to which this disclosure pertains. In the case of conflict, the present document, including definitions will control.

Additional features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims. These and other features of the disclosure will become more fully apparent from the following description and appended claims, or can be learned by the practice of the principles set forth herein.

### OVERVIEW

Aspects of the invention are set out in the independent claims and preferred features are set out in the dependent claims. Features of one aspect may be applied to each aspect alone or in combination with other aspects.

Disclosed herein, are systems, methods and computer-readable storage media for verifying the trustworthiness of a physical host underlying a virtual network device within a network. As will be described below, when a peer network device (which can be a physical or a virtual network device such as a router) attempts to determine trustworthiness of a peer virtual network device (e.g., a virtual router), such determination is incomplete without attestation of the physical host or device on which the peer virtual network device is operating. In view of this deficiency, example embodiments below describe a process for validating (attesting) the underlying physical host.

In one aspect, a method includes receiving, from a peer network device and at a virtual component, a verification request for verifying a physical host on which the virtual component is operating; sending, by the virtual component, a request to a trust module of the physical host to obtain physical host verification information; receiving, at the virtual component and from the trust module, the physical host verification information, the physical host verification information including at least a signed verification status of the physical host and an associated timestamp of the physical host, a time synchronization token and hypervisor information; and sending, by the virtual component and to the peer network device, the physical host verification information, the peer network device determining trustworthiness of the physical host as part of determining trustworthiness of the virtual component prior to establishing a communication session with the virtual component.

In one aspect, a system includes a peer network device and a virtual component configured to operate on a physical host and communicate with the peer network device. The virtual component is further configured to receive, from the peer network device, a verification request for verifying the physical host on which the virtual component is operating; send a request to a trust module of the physical host to obtain physical host verification information; receive, from the trust module, the physical host verification information, the physical host verification information including at least a signed verification status of the physical host and an associated timestamp of the physical host, a time synchronization token and hypervisor information; and send, to the peer network device, the physical host verification information, the peer network device being configured to determine trustworthiness of the physical host as part of determining trustworthiness of the virtual component prior to establishing a communication session with the virtual component.

In one aspect, a non-transitory computer-readable storage media includes instructions which when executed by one or more processors of a virtual network component, cause the virtual network component to receive, from a peer network device, a verification request for verifying a physical host on which the virtual component is operating; send a request to a trust module of the physical host to obtain physical host verification information; receive, from the trust module, the physical host verification information, the physical host verification information including at least a signed verification status of the physical host and an associated timestamp of the physical host, a time synchronization token and hypervisor information; and send, to the peer network device, the physical host verification information, the peer network device determining trustworthiness of the physical host as part of determining trustworthiness of the virtual component prior to establishing a communication session with the virtual component.

The foregoing, together with other features and embodiments, will become more apparent upon referring to the following specification, claims, and accompanying drawings.

### EXAMPLE EMBODIMENTS

The disclosed technology addresses the need in the art for verifying trustworthiness of a physical host on which a virtual network device is operating in order for a peer network device to be able to obtain a complete verification of trustworthiness of the virtual network device prior to communicating therewith. Example embodiments of this disclosure describe a process for validating (attesting) the underlying physical host, in addition to the virtual network device, without which the virtual network device, cannot be fully verified.

The disclosure now turns to an initial discussion of example concepts and technologies for providing verifiable proof of integrity of network nodes traversed by packets.

A computer network can include different nodes (e.g., network devices, client devices, sensors, and any other computing devices) interconnected by communication links and segments for sending data between end nodes. Many types of networks are available, including, for example, local area networks (LANs), wide area networks (WANs), software-defined networks (SDNs), wireless networks, core networks, cloud networks, the Internet, etc. When data traffic is transmitted through one or more networks, the data traffic typically traverses a number of nodes that route the traffic from a source node to a destination node.

While having numerous nodes can increase network connectivity and performance, it also increases security risks as each node that a packet traverses introduces a risk of unauthorized data access and manipulation. For example, when a packet traverses a node, there is a security risk that is introduced which can result from the node being potentially compromised (e.g., hacked, manipulated, captured, etc.). As a result, compliance, security, and audit procedures can be implemented to verify that network users, devices, entities and their associated network traffic comply with specific business and/or security policies.

When sensitive information is transmitted through nodes in a network, such as in battlefield, banking settings, and healthcare settings, such traffic should be sent through uncompromised nodes to prevent access to, leakage of, or tampering with the data and sensitive information carried by that traffic. If an attacker gains access to a device via some exploit, previous protection and encryption approaches for network interfaces are generally ineffective at mitigating or addressing such unauthorized access and resulting damage.

Proving that network traffic complies with specific policies can involve proving in a secure way that the traffic has traversed a well-defined set of network nodes (e.g., firewalls, switches, routers, etc.) and that such network nodes have not been modified or compromised. This can help ensure that the network nodes have performed their expected or intended actions (e.g., packet processing, security or policy compliance verification, routing, etc.) on the packet and that the packet has traversed the network nodes.

Some security approaches can aim at removing any implied trust in the network used for connecting applications hosted on devices to cloud or enterprise hosted services. Moreover, some security approaches can be implemented to verify the trustworthiness (e.g., the integrity, identity, state, etc.) of the network and/or nodes traversed by packets. In some cases, certain verification checks can be implemented to validate or verify that traffic has traversed a specific set of nodes and that such nodes are trusted and uncompromised. In some examples, certain Proof-of-Transit (POT), Trusted Platform Module (TPM), attestation, or proof of integrity approaches can be implemented to verify or validate the trustworthiness of a node in a network.

POT can enable a network user or entity to verify whether traffic traversed a defined set of network nodes. Attestation, as further described below, can also be used to verify the integrity of a node. In some cases, the approaches herein can integrate both to offer a secure approach that allows network users or entities to verify that traffic has traversed a defined set of nodes and that such nodes have not been compromised.

In some cases, TPM can be implemented to collect and report the identity of hardware and software components in a platform to establish trust for that platform. A TPM used in a computing system can report on the hardware and software of the system in a manner that allows verification of expected behavior associated with that system and, from such expected behavior, establishment of trust. The TPM can be a system component containing state that is separate from the host system on which the TPM reports identity and/or other information. TPMs can be implemented on physical resources (indirectly or directly) of the host system. In some examples, a TPM component can have a processor and memory such as RAM, ROM and/or flash memory. In other implementations of a TPM, a host processor can run TPM code while the processor is in a particular execution mode. Parts of system memory can be partitioned by hardware to ensure that memory used by the TPM is not accessible by the host processor unless the host processor is in the particular execution mode.

In some cases, trusted computing (TC) implementations, such as TPM, can rely on Roots of Trust. Roots of Trust can be system elements that should be trustworthy because misbehavior by such system elements may not be detectable. A set of roots can provide a minimum functionality that can sufficiently describe characteristics that affect a platform's trustworthiness. In some cases, determining if a Root of Trust is behaving properly may not be possible; however, it may be possible to determine how roots are implemented. For example, certificates can provide assurances that the root has been implemented in a way that renders it trustworthy.

To illustrate, a certificate may identify the manufacturer and evaluated assurance level (EAL) of a TPM. Such certification can provide a level of confidence in the Roots of Trust used in the TPM. Moreover, a certificate from a platform manufacturer may provide assurance that the TPM was properly installed on a system that is compliant with specific requirements so the Root of Trust provided by the platform may be trusted. Some implementations can rely on three Roots of Trust in a trusted platform, including Root of Trust for Measurement (RTM), Root of Trust for Storage (RTS), and Root of Trust for Reporting (RTR).

The RTM can send integrity information, such as integrity measurements, to the RTS. Generally, the RTM can be a processor controlled by a Core Root of Trust for Measurement (CRTM). The CRTM is the first set of instructions executed when a new chain of trust is established. When a system is reset, the processor (e.g., RTM) can execute the CRTM, which can then send values that indicate its identity to the RTS. Thus, in some cases, the starting point for a chain of trust can be established in this manner.

As previously noted, the TPM memory can be shielded from access by an entity other than the TPM. Since the TPM can be trusted to prevent unauthorized access to its memory, the TPM can act as an RTS. Moreover, the RTR can report on the contents of the RTS. An RTR report can be a digitally signed digest of the contents of one or more values in a TPM.

Attestation is another example trusted computing approach that can be used to verify the integrity of a node. Attestation can be applied to a node, such as a router or switch, to review logs from connected devices, such as Layer 1 (L1) or Layer (L2) connected devices and maintain these logs in trusted storage. These logs can be protected by embedding a private key into every trust anchor produced for a hardware device and publishing the device's public key as a certificate to adjacent devices. This peering device can then push log updates from trusted storage periodically and/or on some log entry event. Reviewing any provided signed logs can provide an understanding of the current trustable state of a peer device. Moreover, by looking back at the set of transactions which have occurred since boot time, a determination can be made regarding the trustworthiness of the information which that peer device is asserting.

In some examples, metadata elements containing security measurements or evidence, can be used to provide verifiable evidence of device trustworthiness (e.g., integrity, state, etc.). The metadata elements can include applicable data for verifying trustworthiness of a device and be provided through an applicable technique for verifying device trustworthiness. For example, the metadata elements can be provided as part of a canary stamp associated with the device. A canary stamp can indicate or otherwise include a signed measurement associated with a device for verifying trustworthiness of the device. In turn, such measurements can be referred to as canary stamps because each signed measurement is like a stamp proving its authenticity, and like a canary in a coal mine that indicates an early sign of trouble. Such verifiable evidence can be appended or included in packets transmitted by nodes on a network. The metadata elements can thus be used to evaluate the trustworthiness of a node(s) and react accordingly. For example, a device or entity can review metadata element associated with a node to determine that the node should not be trusted and adjust a network policy to mitigate possible damage.

In some implementations, dedicated cryptoprocessors, such as a processor in TPM platform, can take measurements to attest to the trustworthiness (e.g., identity, integrity, etc.) of a node and its environment (e.g., software, hardware, operating system, running binaries, firmware, etc.). These measurements include evidence that the node is in a safe state. In some cases, these measurements can be provided through canary stamps, as previously described. However, a receiver of such evidence should be able to certify that the evidence is fresh, as the evidence can become stale thereby potentially reducing its effectiveness in reflecting the current trustworthiness of a node. For example, without ensuring freshness of such evidence, an attacker has an opening to inject previously recorded measurements and asserting what is replayed as being current.

Some approaches can detect the replaying of old evidence via a "nonce". A nonce is an arbitrary number that can be used to introduce randomness. In some instances, a nonce can be used just once in a cryptographic communication. Further, a nonce can be passed into a TPM and/or incorporated into a canary stamp/metadata. In some cases, a result provided by the TPM can include a signature based on the nonce. Since the nonce can be grounded in a transactional challenge/response interaction model, in some cases the nonce may be less effective with unidirectional communications originating from an attesting device. For example, a nonce may less effective with an asynchronous push, multicast, or broadcast message.

However, there are numerous use cases where a platform assessing whether its peers are trustworthy is advantageous. Being able to perform a unidirectional attestation using an asynchronous push, multicast, or broadcast message in conjunction with trusted binaries opens many possibilities for platforms to assess whether their peers are trustworthy. Detection of invalid attestations can trigger alarms or events, reduction of network access from a suspect device, or can become a part of Admission Control (e.g., IEEE 802.1X). Some platforms can be configured to support the unidirectional attestation mechanism.

Other freshness approaches can be based on trusted computing capabilities, such as TPM. For example, a token can be generated which allows external entities to validate freshness of asserted data based on the state of internal counters within the TPM. This token can be used to detect replay attacks, and provide attestation for asynchronous push, multicast, and broadcast messages.

Various of the foregoing approaches can be combined with TPM-integrated capabilities aimed at verifying that valid compute components, such as binary processes, are running on a node. These capabilities can include, for example, Trusted Execution Environments (TEE) which provide runtime malware protections, Authenticated Code Modules (ACM) which ensure that only digitally-signed code modules can be loaded into a processor, and the like. These technologies can validate that a processor is running known software with a valid chain of binary signatures.

In some cases, metadata elements, e.g. canary stamps, and tokens can be created by extracting current counters (e.g., clock, reset, restart) from a node's TPM, and incorporating such counters and security measures taken from the node into a packet. In some examples, the current counters and/or security measures can be hashed with information within an external TPM. The metadata elements and tokens can thereby provide a non-spoofable token or metadata element, which can bind continuously incrementing counters on an attestee with a known external state. Any resetting of the TPM counters is visible in any subsequent TPM queries, and any restarting of a platform is also exposed in subsequent TPM queries. Within these bounds of reset and restart, the TPM's time ticks counter continuously increments. Therefore, any push of attestee TPM information which includes these counters can be determined to have occurred subsequent to any previously-received measurement. Also, if the reset and restart counters have not changed, the incremental time since any previous measurement can also be known.

In some cases, a large amount of information that should be trusted by network peers may not be contained within the TPM's Platform Configuration Registers (PCR). As a result, indirect methods of validating that a node has not been compromised can be applied.

The receipt of the metadata elements, e.g. canary stamps, and/or tokens can mean that a receiver should have the option of verifying the information. In many cases, such verification can be performed without the need of supplementary evidence being sent with the canary stamp. Moreover, in non-controller based or centralized implementations, the verification steps do not have to occur at the receiver.

In some integrity verification implementations, a controller or device can implement an integrity verification application. The integrity verification application can be designed to recognize change events and evaluate known good values, which allow evaluation of a boot-integrity stamp and a running process binary signature stamp based on, for example, TPM counters, timestamps, nonces, and/or time tokens. On any discrepancy, a controller or centralized device can isolate a compromised node from its network peers by shutting down the interfaces of the node.

In some examples, the metadata elements, e.g. canary stamps, and/or verifications for integrity can be implemented, such as a measured-boot stamp (e.g., SHA1 hash over PCRs 0-7), a verified-boot stamp (e.g., which can verify that only recognized binaries were executed when booting), a process-stamp (e.g., root-of-trust validated through a process which is asserting a particular protocol or protocols), a file-system stamp (e.g., all files within a vendor determined set of directories), a log-integrity stamp (e.g., used to augment existing integrity analytics and forensics), a configuration stamp (e.g., State of the current device configuration), etc. Some implementations can achieve all or some of these stamps, depending on the implementation. Moreover, in some implementations, all or some of these stamps can be implemented or achieved using a single or multiple stamps.

As previously explained, TPM provides methods for collecting and reporting the identity of hardware and software components in a platform to establish trust for that platform. TPM functionality can be embedded in a variety of devices including mobile phones, personal computers, network nodes (e.g., switches, routers, firewalls, servers, network appliances, etc.), and/or any other computing devices. Further, attestation can describe how the TPM can be used as a hardware root of trust and offer proof of integrity of a node. Such integrity can include hardware integrity, software integrity (e.g., micro loader, firmware, boot loader, kernel, operating system, binaries, files, etc.), and runtime integrity.

In some cases, TPM and attestation can be implemented as described herein to provide proof of integrity and proof of transit through uncompromised nodes. In some examples, metadata elements and tokens containing or reflecting security measures are used as previously mentioned to validate the integrity of a node and perform continuous evaluation of node integrity. Thus, the metadata elements and tokens described herein can be used to provide proof of transit through uncompromised nodes.

In some examples, the metadata elements and tokens can be added as additional metadata to packets that traverse a network where proof of transit via uncompromised nodes is desired. Various strategies can be implemented for transporting the metadata elements and tokens in a packet. In some cases, the metadata elements and tokens can be carried within an In-Situ (or in-band) Operations, Administration and Management (IOAM) data field.

In some implementations, the metadata elements and tokens can be carried with IOAM trace data. For example, a canary stamp can be carried as part of an IOAM data field in a variety of encapsulation protocols such as, for example and without limitation, IPv4, IPv6, NSH (Network Service Header), etc. In some cases, the canary stamp can be carried in an IOAM data field as an IOAM Trace option data element (e.g., with an IOAM Trace type for node integrity canary stamp). A metadata element, token, or digest, e.g. canary stamp digest, can be added in the IOAM trace option of a packet by each node that forwards the packet.

When the packet reaches a node (e.g., the destination node and/or an intermediate node) that removes IOAM metadata (e.g., an IOAM decapsulating node), the validity of the metadata element and/or token in the packet can be verified to determine that the packet traversed uncompromised nodes. In some examples, since canary stamps are time bound, the packet trace timestamps defined in IOAM can be used to validate the canary stamp in the time window the packet traversed that node.

Verification can be performed without placing a large transactional load on the verifier or a device, such as a controller, that will ultimately validate the security measurements associated with the metadata elements or tokens. This is because the measurement values can often change infrequently. The verifier may only need to validate a metadata element and/or token carried within an IOAM data trace whenever the associated security measurements associated change (e.g., a verifier may only need to check with a controller whenever it sees a node's TPM extends a PCR value which was not previously confirmed by the verifier).

In some cases, when only the time ticks within a signed metadata element increases, only the signature of the metadata element is validated. To do this, the verifier may use the public key of any node which can place a metadata element. Such signature validation can be done without using a controller to verify the measurements.

In another example, a packet can carry IOAM POT data with space optimization of metadata element values, e.g. canary stamp values. For example, a new IOAM POT data field can carry a canary stamp or a hash extend of a canary stamp and, in turn, canary stamp data can be carried across nodes. In some cases, a canary stamp hash extend can be a similar method as PCR extend operation performed by TPMs.

In some cases, the canary stamp hash can provide a one-way hash so that a canary stamp recorded by any node cannot be removed or modified without detection. IOAM proof of transit option data for a canary stamp digest can be defined by a hash algorithm (e.g., 20 octets with SHA1, 32 octets with SHA 256, etc.). In some implementations, each node along a path of the packet can forward the packet with a new or updated canary stamp digest. In some examples, the new or updated canary stamp digest can be generated by a node as follows: IOAM canary stamp digest new value = Digest of (IOAM canary stamp digest old value ∥ hash(canary stamp of the node)), where the IOAM canary stamp digest old value can refer to the canary stamp digest included in the packet by one or more previous hops.

Moreover, in some cases, a Per Packet Nonce (PPN), where PPN changes per packet and is carried as another field within the IOAM metadata option, can be added to provide robustness against replay attacks. To illustrate, in some examples, a PPN can be added as follows: IOAM canary stamp digest new value = Digest of (IOAM canary stamp digest old value ∥ hash(canary stamp of the node ∥ PPN)). A node creating the new value for the IOAM canary stamp digest can thus take the value of any previous IOAM canary stamp digest and extend/hash that value with the node's current canary stamp. The result of the concatenation and hashing can then be written into IOAM POT data (or other IOAM data fields) as the new IOAM canary stamp digest.

At the verifier (e.g., the device verifying the canary stamp data), the same operation can be performed over expected canary stamp values calculated for the nodes that are traversed in the time window when the packet was forwarded. A verifier can be an inline device or a centralized device. Moreover, in some examples, nodes that are expected to be traversed can be identified using IOAM tracing, routing state or by sending active probes. A match between the value of POT data carrying specific metadata elements, e.g. a canary stamp digest and the expected canary stamp value, can prove that the packet traversed through trusted or uncompromised nodes.

In some examples, one or more strategies can be implemented to optimize metadata element validation. For example, metadata elements, e.g. canary stamps, can detect attempts of a replay attack by embedding a nonce as well as TPM or TPM2 counters (e.g., clock, reset, restart). In some cases, this nonce can be part of the metadata elements and different from the PPN described above.

The nonce is relevant to a receiver as the interval from the nonce's creation time to the first stamp received by the verifier can define the interval of freshness (e.g., the measurement is no older than this interval of freshness). From there, the TPM2 time ticks counter can be used to maintain that initial gap of freshness even without the delivery of a new nonce.

In some implementations, to optimize metadata element or token validation across nodes, the following approaches can be implemented to deliver synchronization information from a central component to each node and the verifier. For example, a central server can broadcast or multicast centralized nonce values (e.g., tracked random numbers). Each node can pick up the latest nonce and use it to attest a value. A verifier can know the freshness of a metadata element or token it receives from each node. This freshness can be the delta in time since that particular nonce was issued. Subsequent attestations can use the incrementing time ticks to prove freshness from that initial time gap. In some cases, the issuing of new nonces can reset the time gap to a potentially shorter interval.

Moreover, in some cases, each node can embed attested time within its metadata element. To get attested time, a TUDA (Time-Based Uni-Directional Attestation) scheme such as the TUDA scheme described in https://tools.ietf.org/html/draft-birkholz-rats-tuda-02, can be used. This can result in the availability of both the attested time at a node, as well as the value of the TPM2 counters at this node when a TUDA time-synchronization token was created. This can eliminate the use of a central nonce authority, but can increase the size of the metadata element as the nonce can be replaced by the TUDA time-synchronization token. This approach may also implement a central timestamp authority as per TUDA. In some examples, for each hop, a canary stamp digest value can be: IOAM canary stamp digest new value = Digest of (IOAM canary stamp digest old value ∥ hash(canary stamp of the node ∥ TUDA time-synchronization token of the node)).

This approach can provide numerous benefits. For example and without limitation, with this approach, a verifier can limit the number of verifications by verifying the signature of a hop's time-synchronization token only when it changes. Moreover, with this approach, there may not be a time gap nonce changeover freshness when a first measurement is received. Further, in some cases, this approach can be implemented without also carrying a PPN or without synchronizing a nonce across nodes as previously described.

Further, an attestor, e.g. a node or a verifier, can use random numbers, otherwise pseudo-random numbers, created by peers and/or the attestor to generate and verify attestation information. Specifically, the attestor can accumulate random numbers from one or more layer 2 peers. The random numbers can be accumulated from the peers over a specific amount of time, e.g. a short duration of time. In turn, the random numbers can be combined into a number through an applicable technique, e.g. a Bloom filter. This number can serve as a nonce for a cryptoprocessor for generating a result. As follows, the layer 2 peers, potentially including the attestor, can use the result created by the cryptoprocessor, to verify/validate that their corresponding provided random number was used in generating the nonce ultimately used by the cryptoprocessor to create the result. In turn, the layer 2 peers, potentially including the attestor, can generate verified attestation information based on the random numbers generated by the peers, the nonce created from the random numbers, and/or the result created by the cryptoprocessor from the nonce.

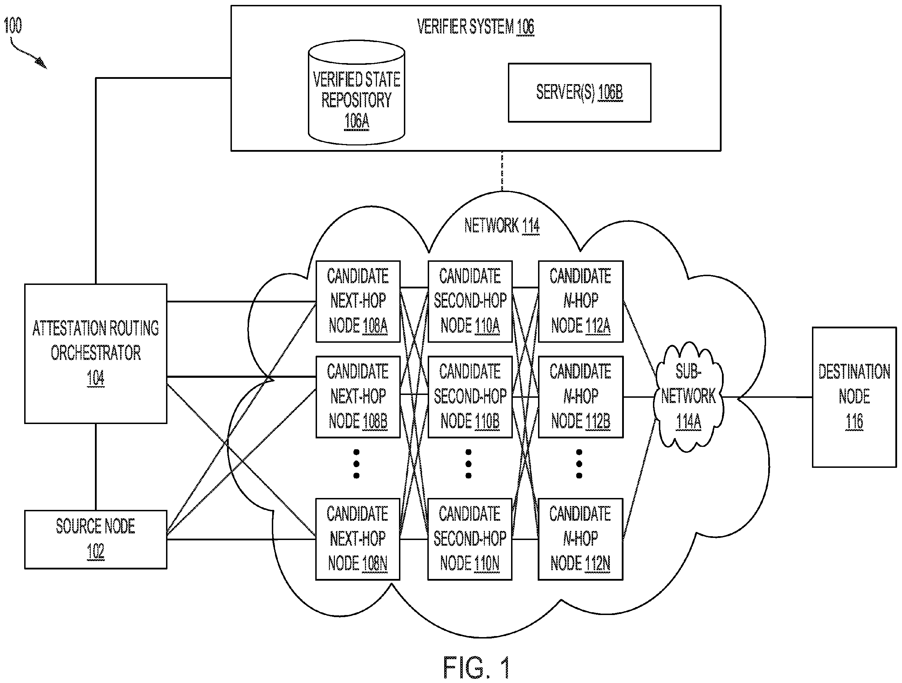

Having provided an initial discussion of example concepts and technologies for providing explicit verifiable proof of integrity of network nodes traversed by packets, the disclosure now turns to FIG. 1.

FIG. 1 is a block diagram of an example of networking environment 100 in accordance with some implementations. While pertinent features are shown, those of ordinary skill in the art will appreciate from the present disclosure that various other features have not been illustrated for the sake of brevity and so as not to obscure aspects of the example implementations disclosed herein.

In this example, the networking environment 100 can include a network 114 of interconnected nodes (e.g., 108A-N, 110A-N, and 112A-N). The network 114 can include a private network, such as a local area network (LAN), and/or a public network, such as a cloud network, a core network, and the like. In some implementations, the network 114 can also include one or more sub-networks, such as sub-network 114A. Sub-network 114A can include, for example and without limitation, a LAN, a virtual local area network (VLAN), a datacenter, a cloud network, a wide area network (WAN), etc. In some examples, the sub-network 114A can include a WAN, such as the Internet. In other examples, the sub-network 114A can include a combination of nodes included within a LAN, VLAN, and/or WAN.

The networking environment 100 can include a source node 102. The source node 102 can be a networking device (e.g., switch, router, gateway, endpoint, etc.) associated with a data packet that is destined for a destination node 116. The source node 102 can communicate with candidate next-hop nodes 108A-108N on the network 114. Each of the candidate next-hop nodes 108A-108N can be included within a respective route between the source node 102 and the destination node 116. Moreover, in some cases, each of the candidate next-hop nodes 108A-108N can communicate with candidate second hop nodes 110A-110N in the network 114. Each of the candidate second hop nodes 110A-110N can similarly communicate with candidate N-hop nodes 112A-112N in the network 114.

The networking environment 100 can also include an attestation routing orchestrator 104. The attestation routing orchestrator 104 can communicate with the candidate next-hop nodes 108A-108N. In some implementations, the attestation routing orchestrator 104 can obtain attestation data (e.g., canary stamps, security measures, signatures, and/or metadata) or vectors from the candidate next-hop nodes 108A-108N. In some examples, the attestation routing orchestrator 104 can obtain additional information from candidate second-hop nodes 110A-110N and/or candidate *N*-hop nodes 112A-112N and utilize the additional information in selecting a particular candidate next-hop node for a packet. In some implementations, the attestation routing orchestrator 104 can also obtain additional information from nodes that are more than two hops away (e.g., candidate third hop nodes, candidate fourth hop nodes, etc.).

The attestation routing orchestrator 104 can communicate with a verifier system 106. While, the verifier system 106 is conceptually shown as being implemented separate from the network 114, the verifier system 106 can be implemented within the network 114, e.g. as part of a network device in the network 114. In some implementations, the attestation routing orchestrator 104 can obtain trusted state, such as a trusted image vector, from the verifier system 106. The verifier system 106 can include a verified state repository 106A and one or more servers 106B. In some examples, the verified state in the verified state repository 106A can include one or more verified images, verified security measurements, verified settings, verified node data, and/or any other verified trust or integrity data. In some implementations, the verified state in the verified state repository 106A can include one or more trusted states or image vectors that are known with a degree of confidence to represent uncompromised states or images (e.g., states or images that have not been hacked, attacked, improperly accessed, etc.).

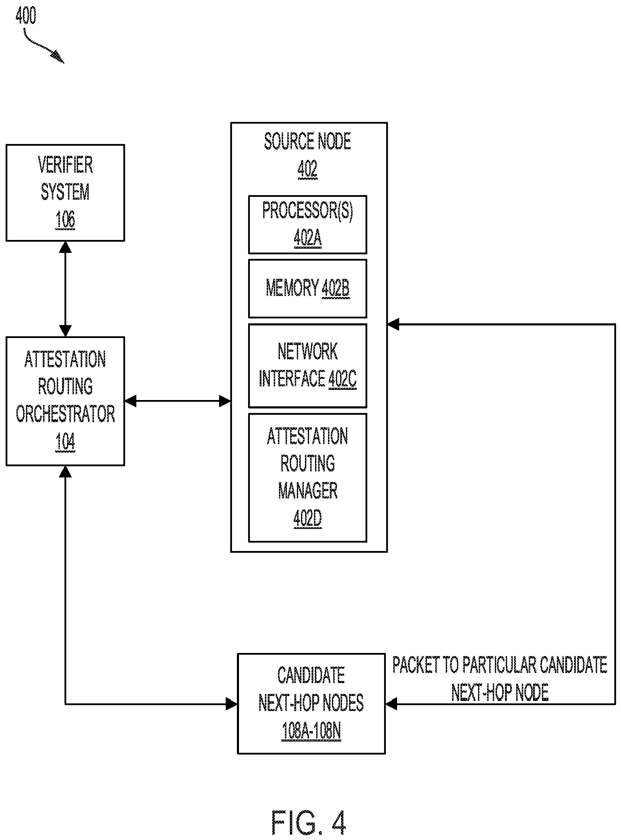

As will be described in great detail with reference to FIG. 4, in some cases, the attestation routing orchestrator 104 can select and direct a data packet to a particular candidate next-hop node of the candidate next-hop nodes 108A-108N based on a trusted state or image vector and the attestation states or vectors. Moreover, the attestation routing orchestrator 104 can direct the data packet destined for the destination node 116 to the particular candidate next-hop node.

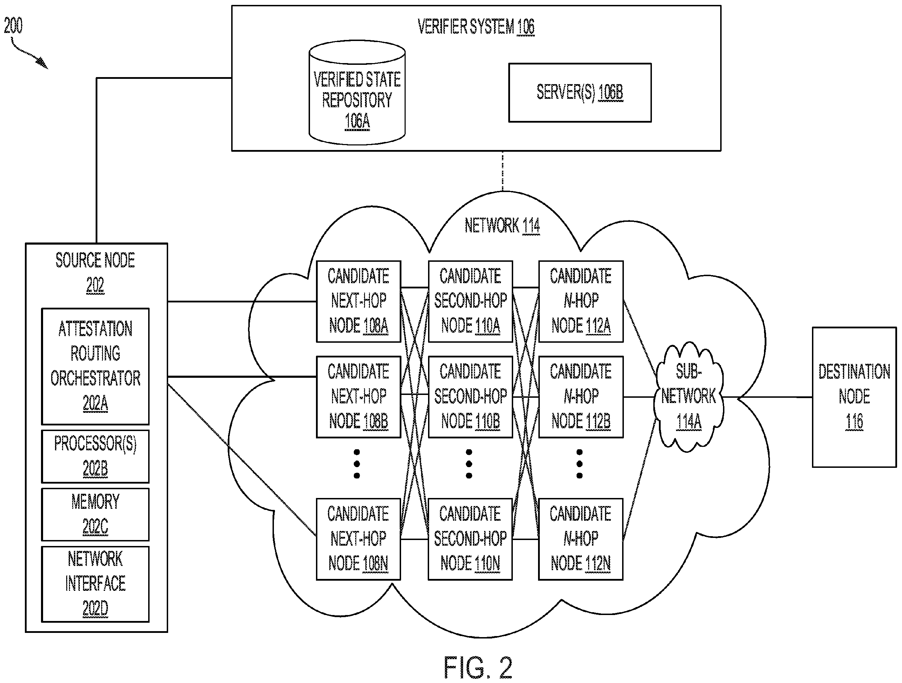

FIG. 2 is a block diagram of another example networking environment 200 in accordance with some implementations. In this example, the networking environment 200 includes a source node 202 that implements an attestation routing orchestrator 202A. In some implementations, the attestation routing orchestrator 202A can be similar to, or adapted from, the attestation routing orchestrator 104 in FIG. 1.

The source node 202 can include one or more processors 202B. In some implementations, the one or more processors 202B can provide processing resources for generating a confidence scores for the candidate next-hop nodes 108A-108N. In some implementations, the one or more processors 202B can provide processing resources for selecting a particular confidence score, from the confidence scores, that satisfies one or more selection criteria.

In some examples, the source node 202 can include a memory 202C. The memory 202C can be, for example and without limitation, a non-transitory memory, such as RAM (random-access memory), ROM (Read-only memory), etc. The memory 202C can store the data, such as the packet destined for the destination node 116. In some implementations, the memory 202C can store a trusted state or image vector obtained from the verifier system 106. In some implementations, the memory 202C can store attestation states or vectors obtained from the candidate next-hop nodes 108A-108N and optionally attestation states or vectors obtained from the candidate second hop nodes 110A-110N and/or the candidate N-hop nodes 112A-112N. The source node 202 can also include a network interface 202D for obtaining, receiving, and transmitting the data packets and states or vectors.

In some implementations, the source node 202 can select and direct a data packet to a particular candidate next-hop node based a trusted state or image vector and the attestation states or vectors.

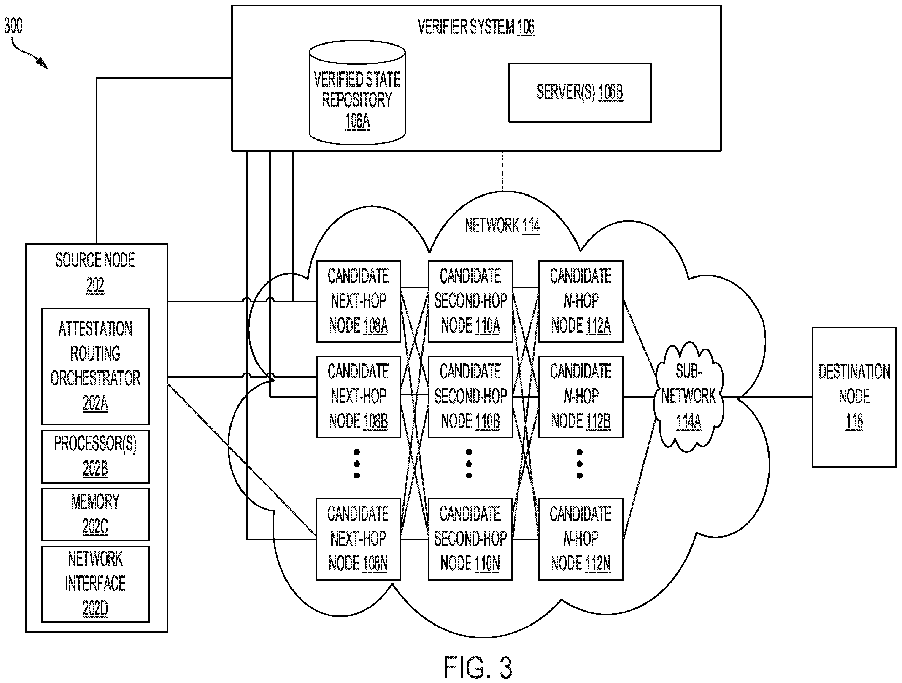

FIG. 3 is a block diagram of another example networking environment 300 in accordance with some implementations. In this example, one or more of the candidate next-hop nodes 108A-108N can relay a trusted state or image vector from the verifier system 106 to the source node 302. In some implementations, the attestation routing orchestrator 302A can be similar to, or adapted from, the attestation routing orchestrator 104 in FIG. 1 and/or the attestation routing orchestrator 202A in FIG. 2.

In some implementations, the verifier system 106 can sign the trusted state or image vector and provide the signed trusted state or image vector to a particular candidate next hop node, which in turn can provide the signed trusted state or image vector to the source node 302. In some implementations, having the particular candidate next hop node provide the signed trusted state or image vector can reduce attestation time (e.g., the time to determine trustworthiness of the particular candidate next hop node) because the source node 302 may not need to contact a remote node (verifier system 106). In some implementations, attestation time can be further reduced because a single attestation process (e.g., the verifier system 106 signing the trusted state or image vector) facilitates the attesting of multiple source nodes. In other words, trusted states or image vectors may not be generated and evaluated on a per source node basis.

Moreover, in implementations in which the source node 302 is not connected to the verifier system 106 (e.g., link down), obtaining the trusted state or image vector from the particular candidate next hop provides an alternative mechanism for node attestation. In some implementations, the verifier system 106 appends a time-stamped response to the trusted state or image vector as part of the signing process, which can be referred to as stapling. Consequently, the source node 302 may not contact the verifier system 106 in order to attest a particular candidate next hop node.

FIG. 4 is a block diagram of an example controller-orchestrated attestation-based routing 400 in accordance with some implementations. In some examples, the source node 402 is similar to, or adapted from, the source node 102 in FIG. 1. As illustrated in FIG. 4, the attestation routing orchestrator 104 is separate from, but coupled (e.g., connected) to, the source node 402. In some examples, the attestation routing orchestrator 104 can include a controller with knowledge of the network 114 that includes the candidate next-hop nodes 108A-N and optionally the candidate second-hop nodes 110A-N and/or the candidate N-hop nodes 112AN.

For example, in some implementations, the attestation routing orchestrator 104 can be a network management system (NMS). As another example, in some implementations, the attestation routing orchestrator 104 can be an intent-based networking system, such as Cisco's Digital Network Architecture (DNA). As yet another example, in some implementations, the attestation routing orchestrator 104 can be a wireless LAN controller (WLC), and the candidate next-hop nodes 108A-108N and optionally the candidate second hop nodes 110A-N and/or the candidate *N*-hop nodes 112A-N can be networking devices such as access points, user devices, switches, routers, firewalls, etc.

The attestation routing orchestrator 104 can obtain attestation data (e.g., canary stamps) from the candidate next-hop nodes 108A-108N. Each of the candidate next-hop nodes 108A-108N can be included within a respective route between the source node 402 and a destination node (e.g., 114). In some implementations, the respective routes are independent of each other.

The attestation routing orchestrator 104 can determine confidence scores based on the attestation data. For example, in some cases, each of the confidence scores can be based on a comparison between a corresponding one of the attestation data and a trusted state or image vector. In some implementations, the attestation routing orchestrator 104 can obtain the trusted state or image vector from the verifier system 106.

In some examples, the attestation routing orchestrator 104 can obtain attestation data from candidate second-hop nodes (e.g., 110A-N) and/or candidate *N*-hop nodes (112A-N). Each of the candidate second-hop nodes and/or the candidate *N*-hop nodes can be included within a respective route between a corresponding one of the candidate next-hop nodes 108A-108N and the destination node. Moreover, each of the confidence scores can additionally be based on a comparison between a corresponding one of the attention data and the trusted state or image vector in combination with a comparison between another corresponding one of the attestation data from the candidate next-hop nodes 108A-N and the trusted state or image vector.

The attestation routing orchestrator 104 can select, from the confidence scores, a particular confidence score that satisfies one or more selection criteria. The particular confidence score is associated with a particular candidate next-hop node of the candidate next-hop nodes 108A-108N.

The attestation routing orchestrator 104 can direct, to the particular candidate next-hop node, a data packet destined for the destination node. For example, in some cases, the attestation routing orchestrator 104 can provide attested route information (e.g., validated canary stamp data, security measurements, etc.) to an attested route manager 402D of the source node 402 in order to facilitate the source node 402 sending the data packet to the particular candidate next-hop node. The attested route information can be indicative of the trustworthiness of each of the candidate next-hop nodes 108A-108N.

For example, in some implementations, the attested route information includes an identifier (e.g., an IP address, a MAC address, an SSID, etc.) identifying a secure candidate next-hop node of the candidate next-hop nodes 108A-108N. In this example, the source node 402 can provide the data packet based on the identifier in order to route the data packet to the secure, particular candidate next-hop node.

As another example, in some implementations, the attested route information can include confidence scores associated with the candidate next-hop nodes 108A-108N. In this example, the attested route manager 402D can select a particular candidate score based on one or more selection criteria. Moreover, the attested route manager 402D can provide the data packet to the particular next-hop node associated with the particular candidate score. In some examples, the attestation routing orchestrator 104 can cease to direct additional data packets to the particular candidate next-hop node in response to determining that the particular confidence score falls below a confidence threshold.

In some cases, the source node 402 can include one or more processors 402A. The one or more processors 402A can provide processing resources for managing attested route information obtained from the attestation routing orchestrator 104. The source node 402 can also include a memory 402B. The memory 402B can include, for example, a non-transitory memory such as RAM, ROM, etc. In some examples, the memory 402B can store data such as the obtained attested route information and data packets to be transmitted. The source node 402 can also include a network interface 402C for obtaining the attested route information and sending/receiving other data.

In some cases, whether a network device has been compromised can be determined based on indicators associated with the network device and time information. The indicators can include, but are not limited to, a set of security measurements or evidence footprints which indicate whether a particular device is compromised. Such indicators can come from one or more sources such as, for example and without limitation, TPM, canary stamps, Syslog, YANG Push, EEM, peer devices, traffic counters, and other sources. Visibility can be a method of identifying a compromise in a timely manner.

As a further advantage of the present disclosure, it should be noted that encryption alone may be insufficient to protect sensitive flows since there are scenarios where even the fact that a flow is occurring between endpoints might be considered information to be protected (e.g., in a battlefield).

As discussed previously, device verification is particularly relevant to hosts in network environments that perform address resolution through ARP. ARP is a fundamental part of IPv4 network connectivity. Operating below the network layer, ARP binds an IP address to the MAC identifier of a network device. ARP is subject to a variety of attacks including spoofing and cache poisoning. Tools such as dsniff and nemesis can be used respectively to easily launch such attacks. An attack on ARP can subsequently enable more sophisticated DoS attacks and MitM attacks.

The present includes systems, methods, and computer-readable media for solving these problems/discrepancies. Specifically, the present technology involves system, methods, and computer-readable media for verifying ARP peers through attestation. Additionally, the present technology involves systems, methods, and computer-readable media for performing ARP attack mitigation if a peer is identified as untrustworthy.

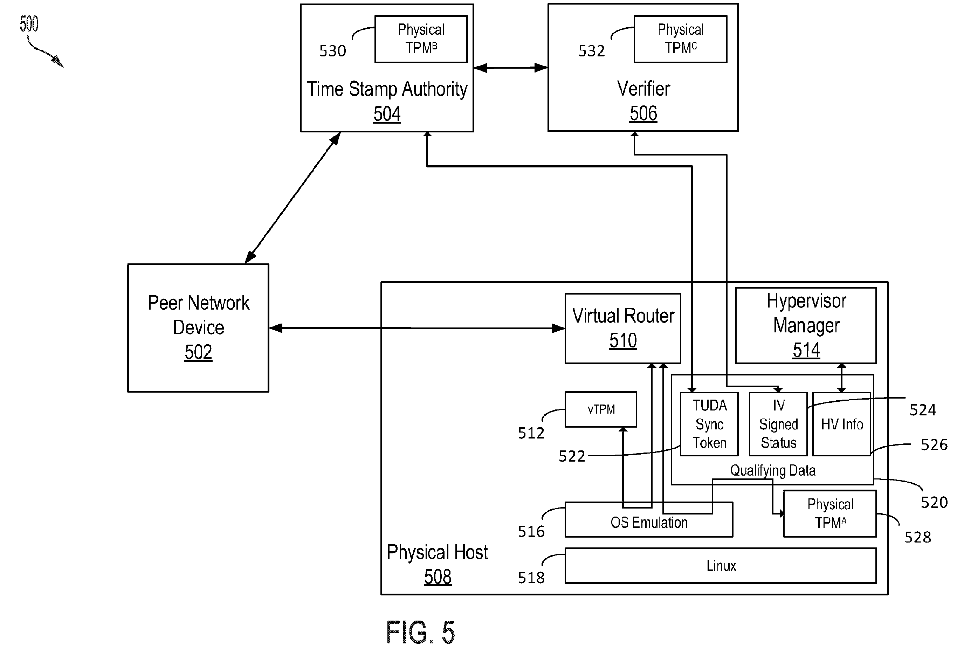

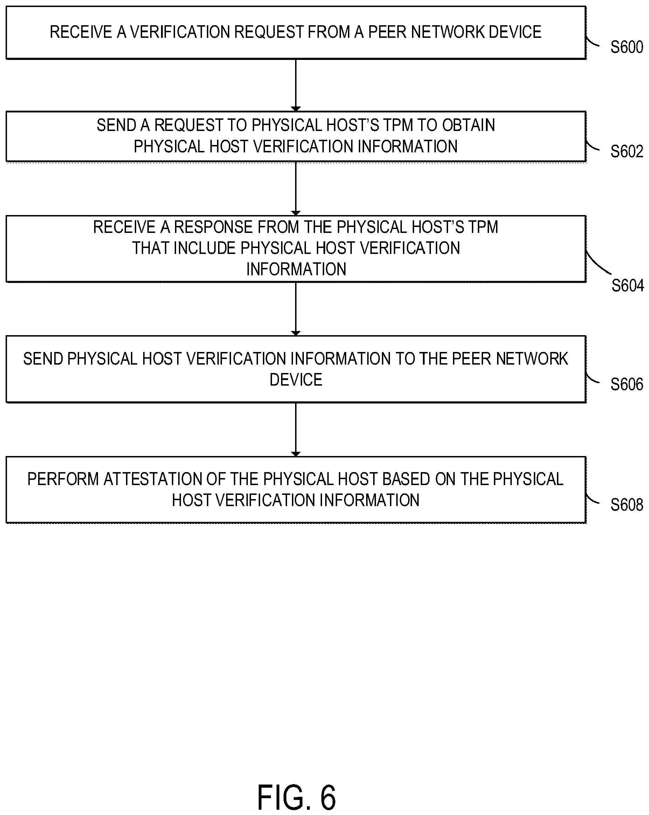

FIG. 5 is a block diagram of an example system for attesting physical hosts on which a virtual network device operates in accordance with some implementations. System 500 of FIG. 5 includes a peer network device 502 (e.g., a router) that may attempt to communicate with another network component such as virtual component 510 (e.g., a virtual router). Peer network device 502 may be a physical device or a virtual network component while virtual component 510, as the name indicates, is virtual. Peer network device 502, prior to communicating with virtual component 510, may attempt to verify trustworthiness (perform attestation) of virtual component 510 to ensure that virtual component 510 is "safe" to communicate with and has not been improperly tampered with. FIG. 5 and FIG. 6 will describe examples of including information that verify trustworthiness of physical host 508 on which virtual component 510 is installed and operates, so that peer network device 502 can be provided with a complete verification of virtual component 510 and its underlying physical host 508.

Virtual component 510 may have a virtual TPM (vTPM) 512 associated therewith. As described above, a TPM (virtual or physical) can be implemented to collect and report the identity of hardware and software components in a platform to establish trust for that platform. A TPM used in a computing system can report on the hardware and software of the system in a manner that allows verification of expected behavior associated with that system and, from such expected behavior, establishment of trust.

Physical host 508 may further include hypervisor manager 514 running thereon that manages hypervisor(s) installed and running on physical host 508 for managing virtual components running on physical host 508.

Physical host 508 may further be running Linux operating system 518 thereon. While Linux is an example operating system running on physical host 508, the present disclosure is not limited thereto and physical host 508 can run any currently known or to be developed operating system thereon. Physical host 508 may also include operating system (OS) emulation 516, which may be used to run the underlying operating system (e.g. Linux operating system 518) on physical host 508.

Physical host 508 also includes a storage component 520 for storing verified and signed validation data that may be referred to as qualifying data. Included in such qualifying data are TUDA synchronization (sync) token (time synchronization token) 522, signed verification status (integrity verification) 524 and hypervisor information (HV Info) 526.

As described above, TUDA (Time-Based Uni-Directional Attestation) is a scheme that may convey attestation timing information by creating a TUDA time-synchronization token such as TUDA sync token 522 and storing it in storage component 520. Using such TUDA token can eliminate the use of a central nonce authority. Stored TUDA sync token 522 may include information about timing of the latest signed verification status 524. Stored TUDA sync token 522 may be provided by timestamp authority 504

Signed verification status 524 includes trust score and integrity information (e.g., PCRs and time ticks) of physical host 508 that can be obtained from TPM^{A} 528 and sent to verifier 506. As will be described below, an integrity verification application running on physical host 508 may obtain the physical host verification information and may then assess the received information to assign a trust score to physical host 508 (according to any known or to be developed industry standard). The trust score and the verification information are then sent to verifier 506 to be signed using a private key (according to known or to be developed industry standards) and sent back to physical host 508 for storing on storage component 520.

Hypervisor information 526 may include man-in-the middle information (e.g., hypervisor(s) operating on physical host 508) to ensure that no man-in-the middle attack (e.g., unauthorized tampering of hypervisors on physical host 508) has occurred and if so, such information can be provided to peer network device 502 to determine reliability of virtual component 510 to communicate with. Such man-in-the-middle information may be provided by hypervisor manager 514. Furthermore, hypervisor information may be used to verify/validate virtual host name running on the device (e.g., by ensuring that the virtual host name running on the device is the same as the virtual host name within hypervisor running on physical host 508). Hypervisor information may include any other known or to be developed information about virtual components running on physical host 508 including those described in U.S. Provisional Application 62/828,721 filed on April 3, 2019.

Physical host 508 also includes a physical TPM (TPM^{A}) 528, where such TPM may be as described above.

As also shown in FIG. 5, system 500 also includes time stamp authority 504 and verifier 506, each of which may be associated with a physical TPM such as one of TPM^{B} 530 and TPM^{C} 532, as shown in FIG. 5.

Time stamp authority 504 and verifier 506 may each be a separate physical component that are communicatively coupled to other components such as peer network device 502 and physical host 508 or may be executed on the same physical component (e.g., can be the same as verifier system 106 described with reference to FIGs. 1-4.

With example system of FIG. 5 described, the disclosure now turns to an example method of verifying trustworthiness (attestation) of a physical host underlying a virtual network component.

FIG. 6 describes an example method of attesting a physical host underlying a virtual network component in accordance with some implementations. FIG. 6 will be described with reference to FIG. 5.

At S600, virtual component 510 receives a verification request from peer network device 502. Such request may be received as a known or to be developed communication message including, but not limited to, an 802.1x message, a Link Layer Discovery Protocol (LLDP) message, Border Gateway Protocol (BGP) message, etc. Such message may be sent by peer network device 502 prior to any attempted communication or exchange of data with virtual component 510 within a network in which virtual component 510 and peer network device 502 are deployed and utilized.

The verification request received at S600 is a request (e.g., a TPM quote request) that may include two components. First component is a request for verification information of virtual component 510 and the second component is a request for verification information of physical host 508. Verification information of virtual component 510 can be obtained and passed on to peer network device 502 according to any known or to be developed method including those described in U.S. Application 16/230,751 filed on December 21, 2018. Obtaining verification information of the physical host 508 will be further described below. In another example, each component of the request may be sent separately to virtual component 510.

Furthermore, the verification request may include a nonce (e.g., a random number), which upon receipt by virtual component 510, is stored in vTPM 512. Based on this nonce, vTPM 512 creates a signature by performing a randomization using its keys (using any known or to be developed industry standard).

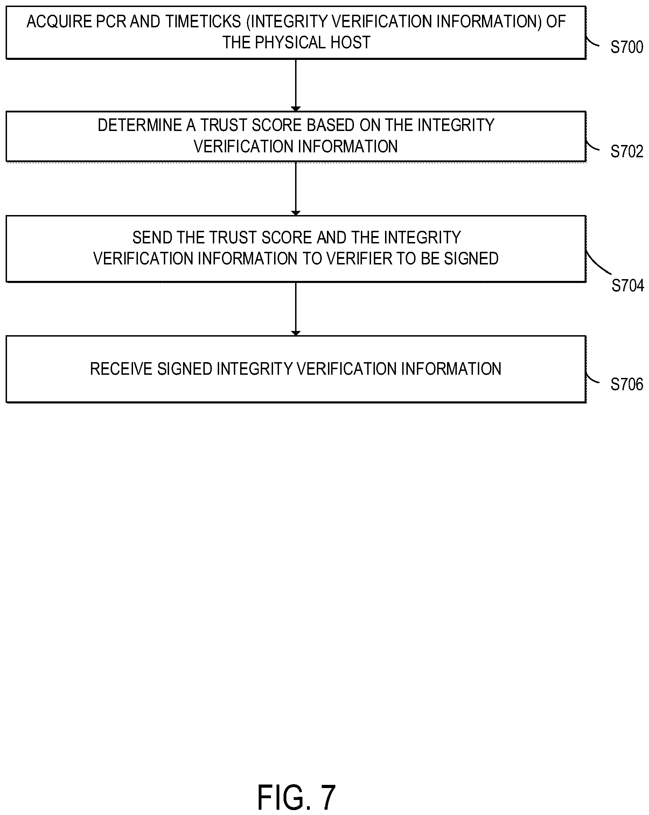

At S602, virtual component 510 sends a request (e.g., a TPM2 quote request) to TPM^{A} 528 to obtain verification information of physical host 508, which as described above may include, but is not limited to, TUDA sync token 522, signed verification status 524, a time reference (timestamp) of the physical host 508, and hypervisor information 526. Obtaining and storing said verification information will be further described below with reference to FIG. 7. This request may similarly include a nonce sent from vTPM 512 to TPM^{A} 528, which can be the signature created at vTPM 512, as described above. This request can be sent from vTPM 512 to TPM^{A} 528 using any known or to be developed API (e.g., on a Uniform Computing System (UCS box).

At S604, virtual component 510 receives a response (e.g., a TPM2 quote) from TPM^{A} 528 with the verification information of physical host 508. A non-limiting example process for performing S602 and S604 is described in U.S. Provisional Application 62/828,721 filed on April 3, 2019.

In one example, the combined size of TUDA sync token 522, signed verification status 524 and hypervisor information 526 may be more than the limit that TPM^{A} 528 can handle for signing. Therefore, in one example, a hash of TUDA sync token 522, signed verification status 524 and hypervisor information 526 may be sent into TPM^{A} 528. The response of S604 may then come back where the hash of TUDA sync token 522, signed verification status 524 and hypervisor information 526 was inserted. The actual TUDA sync token 522, signed verification status 524 and hypervisor information 526 might be returned in clear text as part of a response appended to the TPM2 quote which contains the hash. With such an approach, large chunks of overall TUDA sync token 522, signed verification status 524 and hypervisor information 526 can be validated without having to send everything into TPM^{A} 528.

At S606, virtual component 510 includes the verification information of physical host 508 together with verification information of virtual router 510 in a response message (e.g., a TPM quote) and at S608, sends the response message to peer network device 502. In one example, when virtual component 510 is sending the response message to peer network device 502 for the first time, TUDA sync token 522 is included therein to allow peer network device 502 to determine the actual time (e.g., time of last attestation that resulted in signed verification status 524) that aligns with TPM^{A} 528 timeticks counters. Thereafter and in subsequent response messages (in response to subsequent verification requests received from peer network device 502), virtual component 510 may include incremental timeticks, each of which may be indicative of time elapsed since creation of TUDA sync token 522 and its storage on storage component 520. Incremental timeticks may be received as part of TPM2 quote from TPM^{A} 528 (in response to subsequent TPM2 quote requests made by virtual component 510 to TPM^{A} 528).

At this point, peer network device 502 receives the response message and optionally may also receive timing information of the attestation (same as TUDA sync token) from time stamp authority 504.

At S608, peer network device 502 performs an attestation of virtual router 510 (according to known or to be developed methods as described above) and physical host 508. In one example, peer network device 502 may compare a difference (delta) between timeticks included in signed verification status 524 and TUDA sync token 522 to determine trustworthiness (attest, verify) physical host 508. For example, if such delta is equal to or less than a threshold (which can be a configurable parameter determined based on experiments and/or empirical studies), then peer network device 502 may attest/verify physical host 508 as being trustworthy. If the delta is larger than the threshold, peer network device 502 may determine that physical host 508 is not trustworthy and thus may not communicate (exchange) data with virtual component 510.

FIG. 7 describes an example method of obtaining and storing verification information of a physical host underlying a virtual network component in accordance with some implementations. FIG. 7 will be described with reference to FIG. 5 and FIG. 6.

At S700, an integrity verification application running on physical host 508 (e.g., a processor or a cryptoprocessor of physical host 508) acquires PCRs and timeticks (time of acquired PCRs) from TPM^{A} 528 via any known or to be developed industry standard. PCRs and timeticks information may collectively be referred to as integrity verification information of physical host 508.

In one example, S700 may be performed periodically with a periodicity that may be configurable based on experiments and/or empirical studies.

At S702, the integrity verification application determines a trust score for the integrity verification information received at S700. Such score may be a binary score (e.g., acceptable, unacceptable, 0 or 1, etc.) or may be a scale having a particular range (e.g., 0-10, 0-100, etc.). Trust metrics used for such score are not limited to numerical scores and may take on other forms. For example, the integrity verification application can determine that the boot software and later installed modules are all verified, but that questionable log entries exist resulting from console/root user access.

At S704, the integrity verification application sends the trust score and the integrity verification information to verifier 506 to be signed. TPM^{C} 532 of verifier 506 then signs the trust score, PCRs of TPM^{A} 528 and timeticks (integrity verification information) using private keys known to verifier 506 and/or physical host 508 or alternatively, using any known or to be developed industry standard.

At S706, integrity verification application receives signed integrity verification information from verifier 506 and stores the same on storage component 520 as signed verification status 524, which can then be provided to virtual component 510 upon request (e.g., at S602 and upon receiving a TPM2 quote request from virtual component 510).

In describing FIGs. 5-7, the example of a virtual router residing on a physical host is used. In another example, such virtual router may be replaced with an application running on physical host 508 (e.g., an application residing the cloud) and the same process as described above would be applied to authenticate the application and it's underlying physical host.

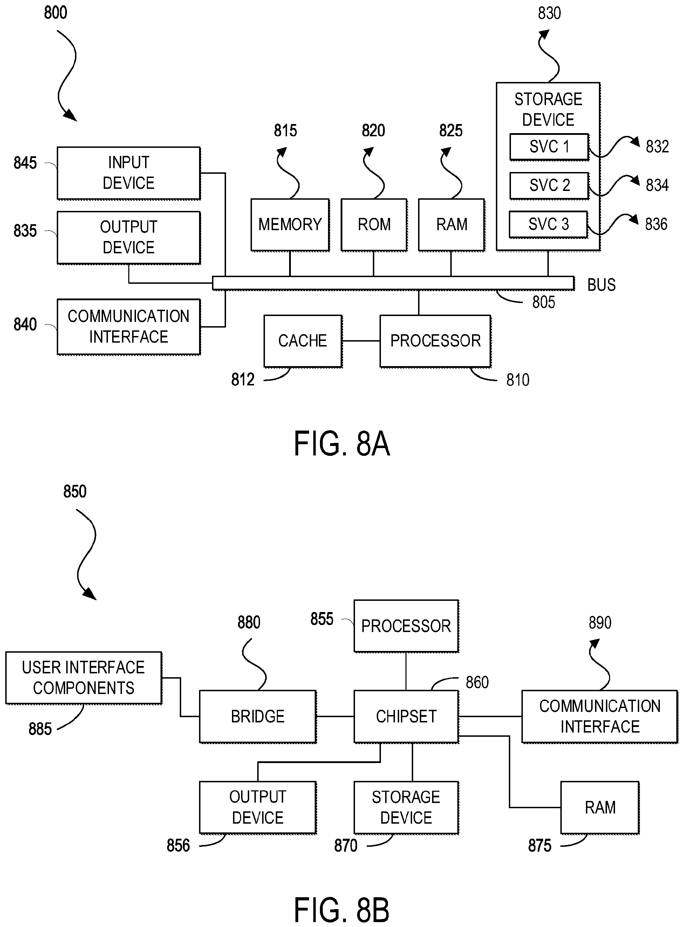

The disclosure now turns to FIGs. 8A and 8B, which illustrate example network nodes and computing devices, such as switches, routers, client devices, endpoints, servers, and so forth that can be utilized to implement network elements and components described above including, but not limited to, peer network device 502, time stamp authority 504, verifier 506, physical host 508, etc.

FIGs. 8A and 8B illustrate systems in accordance with some implementations. The more appropriate system will be apparent to those of ordinary skill in the art when practicing the various embodiments. Persons of ordinary skill in the art will also readily appreciate that other systems are possible.

FIG.8A illustrates an example of a bus computing system 800 wherein the components of the system are in electrical communication with each other using a bus 805. The computing system 800 can include a processing unit (CPU or processor) 810 and a system bus 805 that may couple various system components including the system memory 815, such as read only memory (ROM) 820 and random access memory (RAM) 825, to the processor 810. The computing system 800 can include a cache 812 of high-speed memory connected directly with, in close proximity to, or integrated as part of the processor 810. The computing system 800 can copy data from the memory 815, ROM 820, RAM 825, and/or storage device 830 to the cache 812 for quick access by the processor 810. In this way, the cache 812 can provide a performance boost that avoids processor delays while waiting for data. These and other modules can control the processor 810 to perform various actions. Other system memory 815 may be available for use as well. The memory 815 can include multiple different types of memory with different performance characteristics. The processor 810 can include any general purpose processor and a hardware module or software module, such as services (SVC) 1 832, SVC 2 834, and SVC 3 836 stored in the storage device 830, configured to control the processor 810 as well as a special-purpose processor where software instructions are incorporated into the actual processor design. The processor 810 may essentially be a completely self-contained computing system, containing multiple cores or processors, a bus, memory controller, cache, etc. A multicore processor may be symmetric or asymmetric.

To enable user interaction with the computing system 800, an input device 845 can represent any number of input mechanisms, such as a microphone for speech, a touch-protected screen for gesture or graphical input, keyboard, mouse, motion input, speech and so forth. An output device 835 can also be one or more of a number of output mechanisms known to those of skill in the art. In some instances, multimodal systems can enable a user to provide multiple types of input to communicate with the computing system 800. The communications interface 840 can govern and manage the user input and system output. There may be no restriction on operating on any particular hardware arrangement and therefore the basic features here may easily be substituted for improved hardware or firmware arrangements as they are developed.

The storage device 830 can be a non-volatile memory and can be a hard disk or other types of computer readable media which can store data that are accessible by a computer, such as magnetic cassettes, flash memory cards, solid state memory devices, digital versatile disks, cartridges, random access memory, read only memory, and hybrids thereof.

As discussed above, the storage device 830 can include the software SVCs 832, 834, 836 for controlling the processor 810. Other hardware or software modules are contemplated. The storage device 830 can be connected to the system bus 805. In some embodiments, a hardware module that performs a particular function can include a software component stored in a computer-readable medium in connection with the necessary hardware components, such as the processor 810, bus 805, output device 835, and so forth, to carry out the function.

FIG.8B illustrates an example architecture for a chipset computing system 850 that can be used in accordance with an embodiment. The computing system 850 can include a processor 855, representative of any number of physically and/or logically distinct resources capable of executing software, firmware, and hardware configured to perform identified computations. The processor 855 can communicate with a chipset 860 that can control input to and output from the processor 855. In this example, the chipset 860 can output information to an output device 865, such as a display, and can read and write information to storage device 870, which can include magnetic media, solid state media, and other suitable storage media. The chipset 860 can also read data from and write data to RAM 875. A bridge 880 for interfacing with a variety of user interface components 885 can be provided for interfacing with the chipset 860. The user interface components 885 can include a keyboard, a microphone, touch detection and processing circuitry, a pointing device, such as a mouse, and so on. Inputs to the computing system 850 can come from any of a variety of sources, machine generated and/or human generated.

The chipset 860 can also interface with one or more communication interfaces 890 that can have different physical interfaces. The communication interfaces 890 can include interfaces for wired and wireless LANs, for broadband wireless networks, as well as personal area networks. Some applications of the methods for generating, displaying, and using the technology disclosed herein can include receiving ordered datasets over the physical interface or be generated by the machine itself by the processor 855 analyzing data stored in the storage device 870 or the RAM 875. Further, the computing system 850 can receive inputs from a user via the user interface components 885 and execute appropriate functions, such as browsing functions by interpreting these inputs using the processor 855.

It will be appreciated that computing systems 800 and 850 can have more than one processor 810 and 855, respectively, or be part of a group or cluster of computing devices networked together to provide greater processing capability.

For clarity of explanation, in some instances the present technology may be presented as including individual functional blocks including functional blocks comprising devices, device components, steps or routines in a method embodied in software, or combinations of hardware and software.

In some embodiments the computer-readable storage devices, mediums, and memories can include a cable or wireless signal containing a bit stream and the like. However, when mentioned, non-transitory computer-readable storage media expressly exclude media such as energy, carrier signals, electromagnetic waves, and signals per se.

Methods according to the above-described examples can be implemented using computer-executable instructions that are stored or otherwise available from computer readable media. Such instructions can comprise, for example, instructions and data which cause or otherwise configure a general purpose computer, special purpose computer, or special purpose processing device to perform a certain function or group of functions. Portions of computer resources used can be accessible over a network. The computer executable instructions may be, for example, binaries, intermediate format instructions such as assembly language, firmware, or source code. Examples of computer-readable media that may be used to store instructions, information used, and/or information created during methods according to described examples include magnetic or optical disks, flash memory, USB devices provided with non-volatile memory, networked storage devices, and so on.

Devices implementing methods according to these disclosures can comprise hardware, firmware and/or software, and can take any of a variety of form factors. Typical examples of such form factors include laptops, smart phones, small form factor personal computers, personal digital assistants, rackmount devices, standalone devices, and so on. Functionality described herein also can be embodied in peripherals or add-in cards. Such functionality can also be implemented on a circuit board among different chips or different processes executing in a single device, by way of further example.

The instructions, media for conveying such instructions, computing resources for executing them, and other structures for supporting such computing resources are means for providing the functions described in these disclosures.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

Claim language reciting "at least one of" a set indicates that one member of the set or multiple members of the set satisfy the claim. For example, claim language reciting "at least one of A and B" means A, B, or A and B.

## Claims

1. A method comprising:
receiving, from a peer network device (502) and at a virtual component (510), a verification request for verifying a physical host (508) on which the virtual component (510) is operating;
sending, by the virtual component (510), a request to a trust module (528) of the physical host (508) to obtain physical host verification information;
receiving, at the virtual component (510) and from the trust module (528), the physical host verification information, the physical host verification information including at least a signed verification status of the physical host (524) and an associated timestamp of the physical host, a time synchronization token (522) and hypervisor information (526); and
sending, by the virtual component (510) and to the peer network device (502), the physical host verification information, the peer network device (502) determining trustworthiness of the physical host (508) as part of determining trustworthiness of the virtual component (510) prior to establishing a communication session with the virtual component (510).

2. The method of claim 1, further comprising:
determining, at the trust module (528), a trust score for the physical host (508) based on the physical host verification information;
sending, to an external verifier (506), the trust score and the physical host verification information to be signed; and
receiving, from the external verifier (506), the signed verification status.

3. The method of claim 2, wherein the trust score is a binary score.

4. The method of any of claims 1 to 3, wherein the peer network device (502) determines the trustworthiness of the physical host (508) based on delta information between time information included in the signed verification status (524) and the time synchronization token (522).

5. The method of any of claims 1 to 4, wherein the peer network device (508) is a physical router or a virtual router operating within a network on which the virtual component (510) is also operating.

6. The method of any of claims 1 to 5, wherein the virtual component (510) is a virtual router.

7. The method of any of claims 1 to 6, further comprising:
periodically determining, at the trust module (528), the physical host verification information to be sent to the virtual component (510) upon receiving the request.

8. A system comprising:
a peer network device (502); and
a virtual component (510) configured to operate on a physical host (508) and communicate with the peer network device (502), the virtual component (510) being further configured to:
receive, from the peer network device (502), a verification request for verifying the physical host (508) on which the virtual component (510) is operating;
send a request to a trust module (528) of the physical host (508) to obtain physical host verification information;
receive, from the trust module (528), the physical host verification information, the physical host verification information including at least a signed verification status of the physical host (524) and an associated timestamp of the physical host, a time synchronization token (522) and hypervisor information (526); and
send, to the peer network device (502), the physical host verification information, the peer network device (502) being configured to determine trustworthiness of the physical host (508) as part of determining trustworthiness of the virtual component (510) prior to establishing a communication session with the virtual component (510).

9. The system of claim 8, wherein the trust module (528) is configured to:
determine a trust score for the physical host (508) based on the physical host verification information;
send, to an external verifier (506), the trust score and the physical host verification information to be signed; and
receive, from the external verifier (506), the signed verification status;
optionally wherein the trust score is a binary score.

10. The system of any of claims 8 to 9, wherein the trust module (528) is further configured to:
periodically determine the physical host verification information to be sent to the virtual component (510) upon receiving the request.

11. The system of any of claims 8 to 10, wherein the peer network device (502) is configured to determine the trustworthiness of the physical host (508) based on delta information between time information included in the signed verification status (524) and the time synchronization token (522).

12. The system of any of claims 8 to 11, wherein the virtual component (510) is a virtual router.

13. Apparatus comprising:
means for receiving, from a peer network device (502) and at a virtual component (510), a verification request for verifying a physical host (508) on which the virtual component (510) is operating;
means for sending, by the virtual component (510), a request to a trust module (528) of the physical host (510) to obtain physical host verification information;
means for receiving, at the virtual component (510) and from the trust module (528), the physical host verification information, the physical host verification information including at least a signed verification status of the physical host (524) and an associated timestamp of the physical host, (D24), a time synchronization token (522) and hypervisor information (526); and
means for sending, by the virtual component (510), the physical host verification information, to the peer network device (502) for determining trustworthiness of the physical host (508) as part of determining trustworthiness of the virtual component (510) prior to establishing a communication session with the virtual component (510).

14. The apparatus according to claim 13 further comprising means for implementing the method according to any of claims 2 to 7.

15. A computer program product or computer readable medium comprising instructions which, when executed by a computer, cause the computer to carry out the steps of the method of any of claims 1 to 7.

## Patentansprüche

1. Verfahren, umfassend:
Empfangen einer Verifizierungsanforderung zum Verifizieren eines physikalischen Hosts (508), auf dem eine virtuelle Komponente (510) arbeitet, von einer Peer-Netzwerkvorrichtung (502) und an der virtuellen Komponente (510);
Senden einer Anforderung an ein Vertrauensmodul (528) des physikalischen Hosts (508) durch die virtuelle Komponente (510), um Verifizierungsinformationen des physikalischen Hosts zu erhalten;
Empfangen der Verifizierungsinformationen des physikalischen Hosts an der virtuellen Komponente (510) und von dem Vertrauensmodul (528), wobei die Verifizierungsinformationen des physikalischen Hosts mindestens einen signierten Verifizierungsstatus des physikalischen Hosts (524) und einen assoziierten Zeitstempel des physikalischen Hosts, ein Zeitsynchronisationstoken (522) und Hypervisor-Informationen (526) beinhalten; und
Senden der Verifizierungsinformationen des physikalischen Hosts durch die virtuelle Komponente (510) und an die Peer-Netzwerkvorrichtung (502), wobei die Peer-Netzwerkvorrichtung (502) eine Vertrauenswürdigkeit des physikalischen Hosts (508) als Teil eines Bestimmens einer Vertrauenswürdigkeit der virtuellen Komponente (510) vor einem Einrichten einer Kommunikationssitzung mit der virtuellen Komponente (510) bestimmt.

2. Verfahren nach Anspruch 1, weiterhin umfassend:
Bestimmen eines Vertrauensscores für den physikalischen Host (508) auf der Basis der Verifizierungsinformationen des physikalischen Hosts an dem Vertrauensmodul (528);
Senden des Vertrauensscores und der Verifizierungsinformationen des physikalischen Hosts zum Signieren an einen externen Verifizierer (506) und
Empfangen des signierten Verifizierungsstatus von dem externen Verifizierer (506).

3. Verfahren nach Anspruch 2, wobei der Vertrauensscore ein binärer Score ist.

4. Verfahren nach einem der Ansprüche 1 bis 3, wobei die Peer-Netzwerkvorrichtung (502) die Vertrauenswürdigkeit des physikalischen Hosts (508) auf der Basis von Delta-Informationen zwischen Zeitinformationen, die in dem signierten Verifizierungsstatus (524) enthalten sind, und dem Zeitsynchronisationstoken (522) bestimmt.

5. Verfahren nach einem der Ansprüche 1 bis 4, wobei die Peer-Netzwerkvorrichtung (508) ein physikalischer Router oder ein virtueller Router ist, der innerhalb eines Netzwerks arbeitet, auf dem die virtuelle Komponente (510) ebenfalls arbeitet.

6. Verfahren nach einem der Ansprüche 1 bis 5, wobei die virtuelle Komponente (510) ein virtueller Router ist.

7. Verfahren nach einem der Ansprüche 1 bis 6, weiterhin umfassend:
periodisches Bestimmen der Verifizierungsinformationen des physikalischen Hosts zum Senden an die virtuelle Komponente (510) nach Empfangen der Anforderung an dem Vertrauensmodul (528).

8. System, umfassend:
eine Peer-Netzwerkvorrichtung (502) und
eine virtuelle Komponente (510), die dazu konfiguriert ist, auf einem physikalischen Host (508) zu arbeiten und mit der Peer-Netzwerkvorrichtung (502) zu kommunizieren, wobei die virtuelle Komponente (510) weiterhin konfiguriert ist zum:
Empfangen einer Verifizierungsanforderung zum Verifizieren des physikalischen Hosts (508), auf dem eine virtuelle Komponente (510) arbeitet, von der Peer-Netzwerkvorrichtung (502);
Senden einer Anforderung an ein Vertrauensmodul (528) des physikalischen Hosts (508), um Verifizierungsinformationen des physikalischen Hosts zu erhalten;
Empfangen der Verifizierungsinformationen des physikalischen Hosts von dem Vertrauensmodul (528), wobei die Verifizierungsinformationen des physikalischen Hosts mindestens einen signierten Verifizierungsstatus des physikalischen Hosts (524) und einen assoziierten Zeitstempel des physikalischen Hosts, ein Zeitsynchronisationstoken (522) und Hypervisor-Informationen (526) beinhalten; und
Senden der Verifizierungsinformationen des physikalischen Hosts an die Peer-Netzwerkvorrichtung (502), wobei die Peer-Netzwerkvorrichtung (502) dazu konfiguriert ist, eine Vertrauenswürdigkeit des physikalischen Hosts (508) als Teil eines Bestimmens einer Vertrauenswürdigkeit der virtuellen Komponente (510) vor einem Einrichten einer Kommunikationssitzung mit der virtuellen Komponente (510) zu bestimmen.

9. System nach Anspruch 8, wobei das Vertrauensmodul (528) konfiguriert ist zum:
Bestimmen eines Vertrauensscores für den physikalischen Host (508) auf der Basis der Verifizierungsinformationen des physikalischen Hosts;
Senden des Vertrauensscores und der Verifizierungsinformationen des physikalischen Hosts zum Signieren an einen externen Verifizierer (506) und
Empfangen des signierten Verifizierungsstatus von dem externen Verifizierer (506);
optional wobei der Vertrauensscore ein binärer Score ist.

10. System nach einem der Ansprüche 8 bis 9, wobei das Vertrauensmodul (528) weiterhin konfiguriert ist zum:
periodischen Bestimmen der Verifizierungsinformationen des physikalischen Hosts zum Senden an die virtuelle Komponente (510) nach Empfangen der Anforderung.

11. System nach einem der Ansprüche 8 bis 10, wobei die Peer-Netzwerkvorrichtung (502) dazu konfiguriert ist, die Vertrauenswürdigkeit des physikalischen Hosts (508) auf der Basis von Delta-Informationen zwischen Zeitinformationen, die in dem signierten Verifizierungsstatus (524) enthalten sind, und dem Zeitsynchronisationstoken (522) zu bestimmen.

12. System nach einem der Ansprüche 8 bis 11, wobei die virtuelle Komponente (510) ein virtueller Router ist.

13. Gerät, umfassend:
Mittel zum Empfangen einer Verifizierungsanforderung zum Verifizieren eines physikalischen Hosts (508), auf dem eine virtuelle Komponente (510) arbeitet, von einer Peer-Netzwerkvorrichtung (502) und an der virtuellen Komponente (510);
Mittel zum Senden einer Anforderung an ein Vertrauensmodul (528) des physikalischen Hosts (510) durch die virtuelle Komponente (510), um Verifizierungsinformationen des physikalischen Hosts zu erhalten;
Mittel zum Empfangen der Verifizierungsinformationen des physikalischen Hosts an der virtuellen Komponente (510) und von dem Vertrauensmodul (528), wobei die Verifizierungsinformationen des physikalischen Hosts mindestens einen signierten Verifizierungsstatus des physikalischen Hosts (524) und einen assoziierten Zeitstempel des physikalischen Hosts, ein Zeitsynchronisationstoken (522) und Hypervisor-Informationen (526) beinhalten; und
Mittel zum Senden der Verifizierungsinformationen des physikalischen Hosts durch die virtuelle Komponente (510) an die Peer-Netzwerkvorrichtung (502) zum Bestimmen einer Vertrauenswürdigkeit des physikalischen Hosts (508) als Teil eines Bestimmens einer Vertrauenswürdigkeit der virtuellen Komponente (510) vor einem Einrichten einer Kommunikationssitzung mit der virtuellen Komponente (510).

14. Gerät nach Anspruch 13, weiterhin umfassend Mittel zum Implementieren des Verfahrens nach einem der Ansprüche 2 bis 7.

15. Computerprogrammprodukt oder computerlesbares Medium, das Anweisungen umfasst, die bei Ausführung durch einen Computer bewirken, dass der Computer die Schritte des Verfahrens nach einem der Ansprüche 1 bis 7 durchführt.

## Revendications

1. Procédé comprenant :
la réception, à partir d'un dispositif de réseau homologue (502) et au niveau d'un composant virtuel (510), d'une demande de vérification pour vérifier un hôte physique (508) sur lequel le composant virtuel (510) opère ;
l'envoi, par le composant virtuel (510), d'une demande à un module de confiance (528) de l'hôte physique (508) pour obtenir des informations de vérification de l'hôte physique ;
la réception, au niveau du composant virtuel (510) et à partir du module de confiance (528), des informations de vérification de l'hôte physique, les informations de vérification de l'hôte physique incluant au moins un état de vérification signé de l'hôte physique (524) et un horodatage associé de l'hôte physique, un jeton de synchronisation temporelle (522) et des informations d'hyperviseur (526) ; et
l'envoi, par le composant virtuel (510) et au dispositif de réseau homologue (502), des informations de vérification de l'hôte physique, le dispositif de réseau homologue (502) déterminant la fiabilité de l'hôte physique (508) dans le cadre de la détermination de la fiabilité du composant virtuel (510) avant l'établissement d'une session de communication avec le composant virtuel (510).

2. Procédé selon la revendication 1, comprenant en outre :
la détermination, au niveau du module de confiance (528), d'un score de confiance pour l'hôte physique (508) sur la base des informations de vérification de l'hôte physique ;
l'envoi, à un vérificateur externe (506), du score de confiance et des informations de vérification de l'hôte physique à signer ; et
la réception, à partir du vérificateur externe (506), de l'état de vérification signé.

3. Procédé selon la revendication 2, dans lequel le score de confiance est un score binaire.

4. Procédé selon l'une quelconque des revendications 1 à 3, dans lequel le dispositif de réseau homologue (502) détermine la fiabilité de l'hôte physique (508) sur la base d'informations delta entre des informations temporelles incluses dans l'état de vérification signé (524) et le jeton de synchronisation temporelle (522).

5. Procédé selon l'une quelconque des revendications 1 à 4, dans lequel le dispositif de réseau homologue (508) est un routeur physique ou un routeur virtuel opérant dans un réseau sur lequel le composant virtuel (510) opère également.

6. Procédé selon l'une quelconque des revendications 1 à 5, dans lequel le composant virtuel (510) est un routeur virtuel.

7. Procédé selon l'une quelconque des revendications 1 à 6, comprenant en outre :
la détermination périodique, au niveau du module de confiance (528), des informations de vérification de l'hôte physique à envoyer au composant virtuel (510) à la réception de la demande.

8. Système comprenant :
un dispositif de réseau homologue (502) ; et
un composant virtuel (510) configuré pour opérer sur un hôte physique (508) et communiquer avec le dispositif de réseau homologue (502), le composant virtuel (510) étant en outre configuré pour :
recevoir, à partir du dispositif de réseau homologue (502), une demande de vérification de l'hôte physique (508) sur lequel le composant virtuel (510) opère ;
envoyer une demande à un module de confiance (528) de l'hôte physique (508) pour obtenir des informations de vérification de l'hôte physique ;
recevoir, à partir du module de confiance (528), les informations de vérification de l'hôte physique, les informations de vérification de l'hôte physique incluant au moins un état de vérification signé de l'hôte physique (524) et un horodatage associé de l'hôte physique, un jeton de synchronisation temporelle (522) et des informations d'hyperviseur (526) ; et
envoyer, au dispositif de réseau homologue (502), les informations de vérification de l'hôte physique, le dispositif de réseau homologue (502) étant configuré pour déterminer la fiabilité de l'hôte physique (508) dans le cadre de la détermination de la fiabilité du composant virtuel (510) avant d'établir une session de communication avec le composant virtuel (510).

9. Système selon la revendication 8, dans lequel le module de confiance (528) est configuré pour :
déterminer un score de confiance pour l'hôte physique (508) sur la base des informations de vérification de l'hôte physique ;
envoyer, à un vérificateur externe (506), le score de confiance et des informations de vérification de l'hôte physique à signer ; et
recevoir, à partir du vérificateur externe (506), l'état de vérification signé ;
facultativement, dans lequel le score de confiance est un score binaire.

10. Système de l'une quelconque des revendications 8 à 9, dans lequel le module de confiance (528) est en outre configuré pour :
déterminer périodiquement les informations de vérification de l'hôte physique à envoyer au composant virtuel (510) lors de la réception de la demande.

11. Système selon l'une quelconque des revendications 8 à 10, dans lequel le dispositif de réseau homologue (502) est configuré pour déterminer la fiabilité de l'hôte physique (508) sur la base d'informations delta entre les informations temporelles incluses dans l'état de vérification signé (524) et le jeton de synchronisation temporelle (522).

12. Système selon l'une quelconque des revendications 8 à 11, dans lequel le composant virtuel (510) est un routeur virtuel.

13. Appareil comprenant :
des moyens pour recevoir, à partir d'un dispositif de réseau homologue (502) et au niveau d'un composant virtuel (510), une demande de vérification pour vérifier un hôte physique (508) sur lequel le composant virtuel (510) opère ;
des moyens pour envoyer, par le composant virtuel (510), une demande à un module de confiance (528) de l'hôte physique (510) pour obtenir des informations de vérification de l'hôte physique ;
des moyens pour recevoir, au niveau du composant virtuel (510) et à partir du module de confiance (528), les informations de vérification de l'hôte physique, les informations de vérification de l'hôte physique incluant au moins un état de vérification signé de l'hôte physique (524) et un horodatage associé de l'hôte physique, un jeton de synchronisation temporelle (522) et des informations d'hyperviseur (526) ; et
des moyens pour envoyer, par le composant virtuel (510), les informations de vérification de l'hôte physique au dispositif de réseau homologue (502) pour déterminer la fiabilité de l'hôte physique (508) dans le cadre de la détermination de la fiabilité du composant virtuel (510) avant l'établissement d'une session de communication avec le composant virtuel (510).

14. Appareil selon la revendication 13, comprenant en outre des moyens pour mettre en œuvre le procédé selon l'une quelconque des revendications 2 à 7.

15. Produit de programme d'ordinateur ou support lisible par ordinateur comprenant des instructions qui, lorsqu'elles sont exécutées par un ordinateur, amènent l'ordinateur à exécuter les étapes du procédé selon l'une quelconque des revendications 1 à 7.
